(19) **Europäisches Patentamt**

**European Patent Office**

**Office européen des brevets**

(11) **EP 0 540 715 B1**

(12) **EUROPÄISCHE PATENTSCHRIFT**

(45) Veröffentlichungstag und Bekanntmachung des Hinweises auf die Patenterteilung:
**15.03.2000 Patentblatt 2000/11**

(51) Int. Cl.$^7$: **G06K 7/10**, G02B 6/06

(21) Anmeldenummer: **92910701.9**

(22) Anmeldetag: **21.05.1992**

(86) Internationale Anmeldenummer:
**PCT/EP92/01141**

(87) Internationale Veröffentlichungsnummer:
**WO 92/21099 (26.11.1992 Gazette 1992/29)**

(54) **OPTISCHER SENSOR**

OPTICAL SENSOR

CAPTEUR OPTIQUE

(84) Benannte Vertragsstaaten:
**AT BE CH DE DK ES FR GB GR IT LI LU MC NL SE**

(30) Priorität: **24.05.1991 DE 4117011**

(43) Veröffentlichungstag der Anmeldung:
**12.05.1993 Patentblatt 1993/19**

(73) Patentinhaber:
**GAO Gesellschaft für Automation und Organisation mbH**
**81307 München (DE)**

(72) Erfinder: **STEIN, Dieter**
**D-8150 Holzkirchen (DE)**

(74) Vertreter:
**Klunker, Hans-Friedrich, Dr.**
**Patentanwälte**
**Klunker . Schmitt-Nilson . Hirsch**
**Winzererstrasse 106**
**80797 München (DE)**

(56) Entgegenhaltungen:
**EP-A- 0 012 818**       **EP-A- 0 240 277**
**US-A- 3 187 627**       **US-A- 4 076 378**

- **Proceedings of the Society of Photo-optical Instrumentation Engineers, Band 31, 1972, S.E. Glazer: "Taper measurement techniques", Seiten 13-22**
- **Optical Engineering, Band 20, Nr. 1, Januar/Februar 1981, Bellingham, Washington, US; R.Y. Wong et al.: "Optical system with fiber optical elements", Seiten 95-97**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine Vorrichtung zur optischen Prüfung von Meßobjekten wie Sicherheitsdokumenten oder Etiketten mit einem optischen System, das die vom Meßobjekt kommende Strahlung erfaßt und einer weiterverarbeitenden Einheit zuführt.

Zum Nachweis lichtschwacher, diffus streuender Objekte, wie beispielsweise floureszierende Schichten oder Banknoten mit Lumineszenzmerkmalen, werden optische Linsensysteme eingesetzt, die das vom Objekt emittierte Licht in einem möglichst großen Raumwinkel erfassen.

Für den besonderen Fall, daß Lumineszenz, die bekanntlich in einem schmalen definierten Spektralbereich erfolgt, nachgewiesen werden soll, werden spezielle asphärische Optiken verwendet, die den Einsatz von schmalbandigen Interferenzfiltern ermöglichen und die gefilterte Lumineszenzstrahlung auf einen nachfolgenden Detektor fokussieren.

Diese Optiken weisen idealerweise ein Öffnungsverhältnis, d. h. ein Linsendurchmesser/Brennweiten-Verhältnis D : f von 1 : 1 bis 2 : 1 auf, wobei ein Öffnungsverhältnis von 1 : 1 beziehungsweise 2 : 1 bedeutet, das ein Raumwinkel $\theta = 53°$ beziehungsweise $\theta = 90°$ erfaßt wird. Denn der halbe Raumwinkel $\theta/2$ ist mit dem Öffnungsverhältnis, das auch häufig als Lichtstärke bezeichnet wird, über die trigonometrische Beziehung $(D/f) = 2 \tan (\theta/2)$ verbunden.

Der ideale Öffnungswinkel $\theta/2$ von 45° läßt sich jedoch praktisch kaum realisieren. Die tatsächlich eingesetzten asphärischen Linsen weisen maximal einen Öffnungswinkel von 30 bis 40° und ein Öffnungsverhältnis von ca. 1,7 : 1 auf, was beispielsweise einer Linse mit einem Durchmesser von 22 mm und einer Brennweite von 13 mm entspricht.

Bei beengten Platzverhältnissen, wie sie zum Beispiel in Banknotenprüfern in der Nähe des Meßobjekts grundsätzlich auftreten, sind daher solche Linsenanordnungen nicht ohne Kompromiß zwischen Öffnungsverhältnis und Linsengröße einsetzbar. Denn einer gleichzeitigen Verringerung von Brennweite und Linsendurchmesser bei konstantem Öffnungsverhältnis sind meist vorrichtungsbedingte Grenzen gesetzt, insbesondere, wenn zur Erreichung eines kompakten Aufbaus dicke, kurzbrennweitige Linsen verwendet werden.

Im speziellen Fall des Banknotenprüfers können die Linsen oft nicht näher als ca. 10 mm an das Meßobjekt herangebracht werden, wodurch die Brennweite der Eintrittslinse definiert ist. Ferner sind die Platzverhältnisse gerade bei Banknotenprüfern derart beengt, daß selbst eine Verringerung der Brennweite auf 8 mm und die damit verbundene Verringerung des Linsendurchmessers auf ca. 13,5 mm (bei einem maximalen Öffnungswinkel von 40°) nicht ausreichen würde. Deshalb werden entweder kleinere Linsen verwendet, was zu einer Reduzierung der Lichtstärke des Systems führt, oder es wird, falls mehrere identische Prüfsysteme nebeneinander angeordnet sind, die Zahl der Meßsysteme reduziert, um so größeren Einzelsystemen Platz zu schaffen.

Das Problem der Lichtstärke, d. h. das Problem des Erfassens eines möglichst großen Raumwinkels im Bereich des Meßobjekts bei kleinem Platzbedarf der Optik, kann durch den Einsatz von optischen Fasern gelöst werden. Denn optische Fasern haben bekanntlich eine große numerische Apertur, so daß sie auch bei einem kleinen Durchmesser einen großen Teil der abgestrahlten Intensität erfassen.

Es sind bereits eine Reihe verschiedener Faseranordnungen bekannt geworden, die als Strahlungsempfänger eingesetzt werden. So beschreibt die DE-OS 25 59 430 eine Sensorvorrichtung aus zwei Faserbündeln, wobei über das eine Faserbündel Infrarot-Strahlung auf das zu prüfende Dokument geleitet wird, welches lumineszierende Markierungen auf der Basis seltener Erden enthält. Über das zweite Faserbündel wird das vom Merkmalstoff emittierte sichtbare Licht einer Fotodiode zugeführt.

Eine andere Ausführungsform offenbart die EP-OS 0 240 277. Hier wird ein Faserbündel aus einer Vielzahl von Einzelfasern an der dem Meßobjekt zugewandten Seite, entsprechend dem abzutastenden Bereich aufgefächert, während es an gegenüberliegenden Ende zu einer kleinen lichtemittierenden Oberfläche gebündelt ist und die übertragene Strahlung an einen Detektor weiterleitet.

Aus der EP-PS 0 051 460 ist eine weitere Variante bekannt, die ebenfalls ein entsprechend dem Meßobjekt aufgeweitetes Ende und ein gebündeltes Ende aufweist. In diesem Fall handelt es sich allerdings um ein lichtleitendes Blatt, daß eine streifenähnliche Lichteintrittsfläche aufweist und eine kleine runde Austrittsfläche, an welches sich direkt ein Fotomultiplyer anschließt.

Alle diese Faseranordnungen haben jedoch den Nachteil, daß der Gewinn an Lichtstärke wieder verlorengeht, wenn dahinter eine Optik angeordnet wird. Denn der Einfallswinkel entspricht bei einer geraden Lichtleitfaser dem Ausfallswinkel. D. h., wenn die Faser einen Öffnungswinkel von 70° aufweist und die anschließende Optik, wie bereits ausgeführt, einen maximalen Öffnungswinkel von 30 bis 40°, so geht die Strahlung, die unter einem größeren Winkel als 40° aus der Faser austritt, für die Signalauswertung verloren.

Noch gravierender ist dieses Problem bei der Verwendung von Interferenzfiltern. Denn die Transmissionskurve des Interferenzfilters verschiebt sich bei größeren Einfallswinkeln aufgrund geänderter Gangunterschiede zu kürzeren Wellenlängen. Der maximal tolerierbare Einfallswinkel beträgt für ein herkömmliches Interferenzfilter ca. 20°. Daher muß zwischen Lichtleiter und Interferenzfilter grundsätzlich eine Linsenoptik angeordnet sein, die für einen weitgehend parallelen Strahlengang sorgt. Wie bereits ausgeführt, ist jedoch auch die Anpassung zwischen Linsenoptik und Lichtleiter nicht optimal.

Daher besteht die Aufgabe der Erfindung darin, ein optisches Sensorsystem zu schaffen, insbesondere zum Nachweis lichtschwacher, diffus leuchtender Objekte, das ohne Meßsignalverlust sowohl bei beengten Platzverhältnissen einsetzbar ist, als auch die Verwendung von weiterverarbeitenden optischen Komponenten mit kleinem Öffnungswinkel erlaubt.

Diese Aufgabe wird durch die kennzeichnenden Merkmale der unabhängigen Ansprüche gelöst.

Das Wesentliche der Erfindung liegt in der Verwendung eines speziell geformten, nicht abbildenden optischen Systems, dessen dem Meßobjekt zugewandte Eintrittsfläche konkav ist und eine große numerische Apertur aufweist. Durch die spezielle Gestaltung des optischen Systems wird erreicht, daß Licht, welches beispielsweise unter dem maximalen Eintrittswinkel einfällt, das optische System unter einem wesentlich kleineren Winkel verläßt. Die geometrischen Verhältnisse des optischen Systems werden so gewählt, daß der kleinere Austrittswinkel der maximalen numerischen Apertur einer weiterverarbeitenden Einheit entspricht. Auf diese Weise geht die auf der Meßobjektseite durch die große numerische Apertur gewonnene Lichtstärke nicht verloren.

In einer bevorzugten Ausführungsform handelt es sich bei dem optischen System um einen konisch aufgeweiteten Lichtleiterstab, dessen schmales Ende als Eintrittsfläche dient, während die aufgeweitete Austrittsfläche der weiterverarbeitenden Optik zugewendet ist. Aufgrund der Kegelform ergibt sich nämlich eine Wandlung des Öffnungswinkels, entsprechend der Formel $\sin\alpha = (D/d)\sin\beta$, wobei $\alpha$ der Einfallswinkel auf der Seite des kleineren Querschnitts d und $\beta$ der Austrittswinkel auf der Seite des größeren Querschnitts D ist.

Durch die Querschnittswandlung und die damit verbundene Veränderung der numerischen Apertur ist es möglich, den Austrittswinkel des Faserstabs so einzustellen, daß er dem maximalen Öffnungswinkel einer nachfolgenden Optik entspricht. Beispielsweise tritt ein Lichtstrahl unter $\theta = 32°$ aus dem Lichtleiterstab aus, wenn er unter $\theta = 60°$ eingetreten ist und der Stab eine Querschnittswandlung von 7,5 mm auf 12 mm durchführt.

Auf diese Weise wird durch die Kopplung des erfindungsgemäßen Lichtfaserstabs, der bezüglich seiner Querschnittswandlung optimiert ist, mit einem optisch abbildenden System ein optisches Gesamtsystem geschaffen, das sich durch eine wesentlich gesteigerte Lichtstärke und damit Signalintensität auszeichnet.

Erfindungsgemäß besteht das optische System aus einem aufgeweiteten Lichtleiter mit einer konkaven Eintrittsfläche, wobei die Berandung der konkaven Fläche, vorzugsweise einem Kugelausschnitt, entspricht. Der Durchmesser der Eintrittsfläche ist kleiner als derjenige der Austrittsfläche.

Die spezielle Form der Eintrittsfläche hat den Vorteil, daß an dieser Stelle auftretende Reflexionsverluste minimiert werden können, wenn sich das Meßobjekt in der Ebene des Kugelmittelpunktes befindet. Denn die vom Kugelmittelpunkt ausgehende Strahlung fällt senkrecht auf die Eintrittsfläche und wird somit weder reflektiert noch gebrochen.

Weitere Vorteile und Weiterbildungen der Erfindung werden in der Fig. näher erläutert. Auf eine proportions- und maßstabsgetreue Darstellung wurde zugunsten der Anschaulichkeit verzichtet.

Die Fig. zeigt:

Fig. 1 Prinzipieller Aufbau eines Meßsystems unter Verwendung eines konisch aufgeweiteten Lichtleiterstabes,

Fig. 2 Prinzip des Strahlengangs in einem optischen Linsensystem,

Fig. 3 Abhängigkeit der Signalintensität vom Öffnungswinkel bei kugelförmiger Abstrahlcharakteristik,

Fig. 4 einen prinzipiellen Aufbau einer weiteren erfindungsgemäßen Ausführungsform,

Fig. 5 erfindungsgemäßes Meßsystem mit Interferenzfilter ohne zwischengeschaltetes Linsensystem.

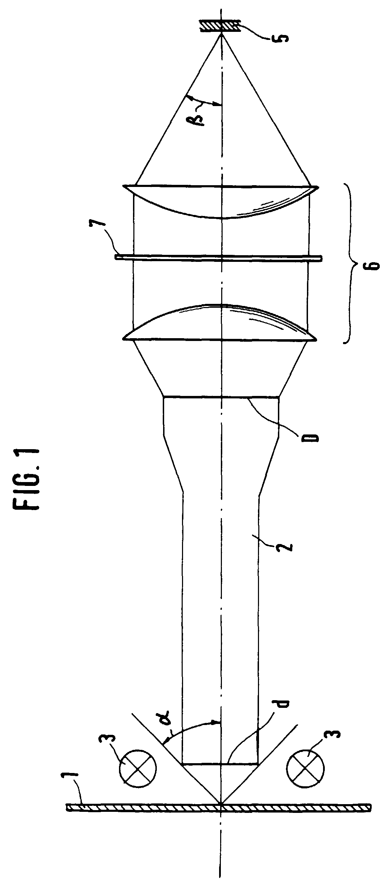

Fig. 1 zeigt den prinzipiellen Aufbau eines erfindungsgemäßen optischen Sensorsystems, allerdings mit ebener statt der erfindungsgemäß konkaven Eintrittsfläche, wie es bei der Messung von Banknoten mit Lumineszenzmerkmalen eingesetzt werden kann. Dieses Sensorsystem kann jedoch auch bei der Überprüfung von Ausweiskarten, Etiketten oder ähnlichem eingesetzt werden und ganz allgemein, überall dort, wo Strahlung unter einem großen Raumwinkel gesammelt und anschließend von einer Optik weiterverarbeitet werden soll. Analoges gilt selbstverständlich für die anderen erfindungsgemäßen Ausführungsformen.

Im gezeigten Ausführungsbeispiel wird eine Banknote 1, die beispielsweise mit floureszierenden Farbaufdrucken versehen ist, von zwei Lichtquellen 3 beleuchtet, die Licht einer entsprechenden Anregungsfrequenz aussenden. Das von der Banknote 1 emittierte diffuse Floureszenzlicht wird unter einem Winkel $\alpha$, dem Öffnungswinkel, in einen Lichtfaserstab 2 eingespeist und von diesem unter Ausnutzung der Totalreflexion zum gegenüberliegenden, aufgeweiteten Ende D weitergeleitet.

Hierbei wird der Lichtfaserstab mit dem kleineren Querschnittsende d bis auf einen Meßabstand zwischen 0 und 10 mm an das Meßobjekt herangebracht. Entsprechend der numerischen Apertur des Lichtfaserstabs 2 können Lichtstrahlen mit einem Winkel $\alpha$ bis zu 80° eingekoppelt werden. Dieser Winkel $\alpha$ wird durch die Querschnittswandlung entsprechend der Gleichung, $\sin\alpha = (D/d)\sin\beta$ auf einen Winkel $\beta$ von ca. 30° herabgesetzt, der von einer nachfolgenden Optik 6, die beispielsweise ein Öffnungsverhältnis von 1,2 : 1 aufweist, weiterverarbeitet werden kann.

Im gezeigten Fall dient die Optik 6 in erster Linie dazu, das vom Faserstab 2 kommende Licht für einen Interferenzfilter 7 aufzubereiten und anschließend auf einen Detektor 5 zu fokussieren. Denn die den Faserstab verlassende Strahlung ist stark diffus und enthält neben der intensitätsschwachen schmalbandigen Floureszenzstrahlung Anteile störenden Streulichts, zum Beispiel der Lichtquellen 3 oder der Umgebung, so daß für eine unverfälschte Signalauswertung eine Filterung des Lichts nötig ist. Das hierfür verwendete Interferenzfilter 7 verlangt jedoch einen nahezu parallelen Strahlengang, der durch die vor dem Filter 7 angeordnete Optik geschaffen wird.

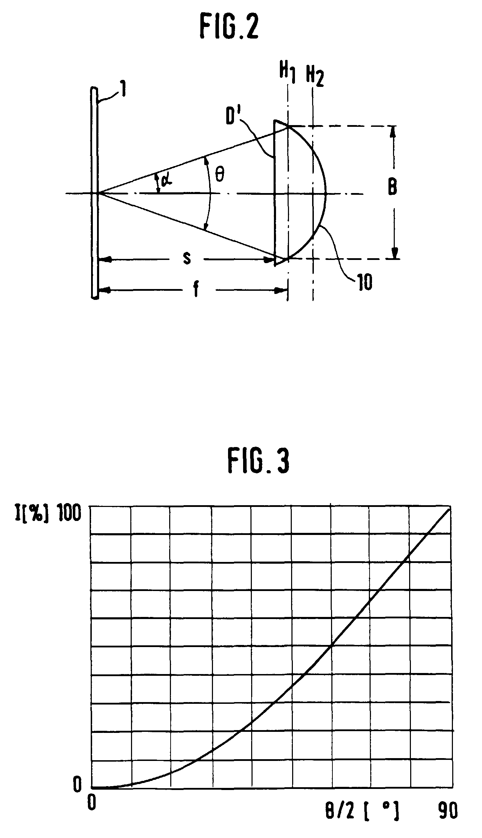

Schon im Bereich des Meßobjekts hat das Sensorsystem erhebliche Vorteile gegenüber den üblicherweise verwendeten Linsenoptiken, die anhand der Fig. 2 nochmals verdeutlicht werden sollen.

Aufgrund der geometrischen Verhältnisse im Prüfsystem kann die Schnittweite s des Linsensystems, d. h. der Abstand vom Meßobjekt im Brennpunkt zur Linsenoberfläche, nicht beliebig verkürzt werden, insbesondere da meist zur Erreichung eines kompakten Aufbaus dicke Linsen mit einer im Verhältnis zu ihrer Brennweite kleinen Schnittweite verwendet werden. Dadurch ist die minimale Brennweite f vorgegeben und bei einem angestrebten Öffnungsverhältnis zwischen 1 : 1 und 2 : 1 ebenfalls der Linsendurchmesser D'. Für eine kurzbrennweitige Linse mit f = 13 mm und ein Öffnungsverhältnis D' : f von 1,7 : 1 ergibt sich daher ein Linsendurchmesser von D' = 22 mm. Über die Beziehung, $\tan\alpha = D'/(2f)$, ergibt sich somit ein maximaler Öffnungswinkel $\alpha$ von ca. 40°.

Wie auch aus der Zeichnung ersichtlich, wird bei der Erfassung des maximalen Raumwinkels $\theta = 2\alpha$ nicht die vollständige räumliche Ausdehnung der Linse 10 ausgenutzt, da sich die oben beschriebenen Größen, wie die Brennweite f, auf die bei der optischen Abbildung wirksame Hauptebene $H_1$ beziehen. Vielmehr besitzt die Linse 10 ein Betrachtungsfenster B, daß nur einen Bruchteil des tatsächlichen Linsendurchmessers D' ausmacht. Für die oben betrachtete kurzbrennweitige Linse mit einem Durchmesser von 22 mm beträgt das Betrachtungsfenster lediglich 5 mm.

Wird diese Linsenoptik durch einen Faserstab gemäß der Erfindung ersetzt, so ist das "Betrachtungsfenster" automatisch durch die kleinere Querschnittsfläche d vorgegeben. Abgesehen von der kleineren räumlichen Ausdehnung kann der Faserstab wesentlich näher an das Meßobjekt herangeführt werden, wodurch sich der erfassbare Raumwinkel nochmals vergrößert und zwar bei einem Meßabstand von 1 mm auf $\alpha$ = 70°.

Ein weiterer Vorteil des Sensorsystems liegt darin, daß die Querschnittswandlung beliebig wählbar ist, so daß der Austrittswinkel $\beta$ grundsätzlich an sich eventuell anschließende weiterverarbeitende Optiken und ihre charakteristischen Größen angepaßt werden kann.

Ferner ist es möglich, das konstruktiv größere Linsensystem über mögliche Krümmungen des Lichtfaserstabs an einen Ort im Meßsystem-Gehäuse anzubringen, an dem ausreichend Platz vorhanden ist.

Hierdurch ist es beispielsweise auch möglich, selbst bei beengten Verhältnissen nahe an Meßobjekt mit mehreren über, beziehungsweise nebeneinander angebrachten Meßsystemen das Objekt abzutasten.

Fig. 3 zeigt die Abhängigkeit der Signalintensität vom Öffnungswinkel $\alpha$ bezogen auf den maximalen Öffnungswinkel von 90°. Für die oben diskutierte Linsenoptik mit einem Öffnungswinkel von 40° ergibt sich hiermit bezogen auf den Maximalwert eine Signalintensität von ca. 24 %. Für das erfindungsgemäße optische Sensorsystem mit einem Öffnungswinkel von 70° dagegen steigt die Intensität auf ca. 65 %. Selbst unter Berücksichtigung der Verluste im Faserstab von ca. 30 % weist das System noch eine Signalintensität von 45 % auf.

Auf diese Weise wird bei wesentlich kompakterem Aufbau eine Signalverbesserung von ca. 100 % erreicht.

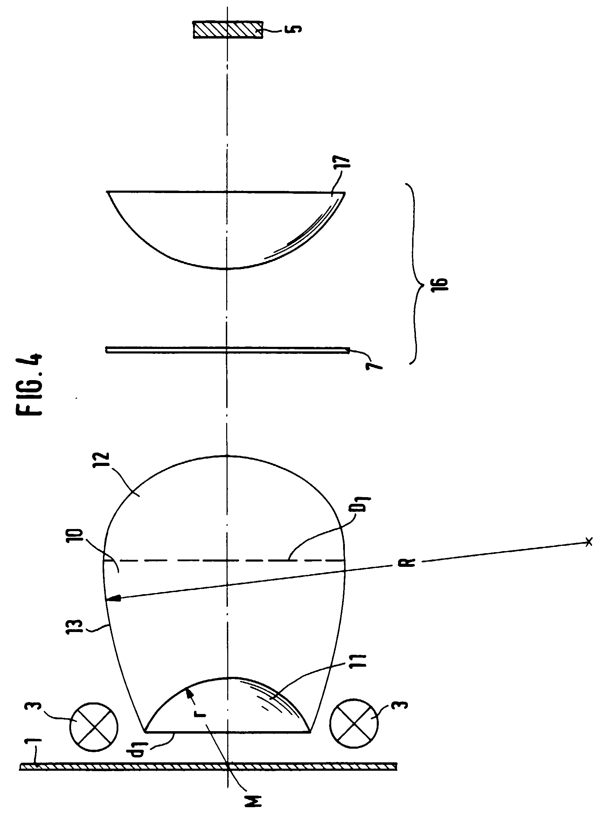

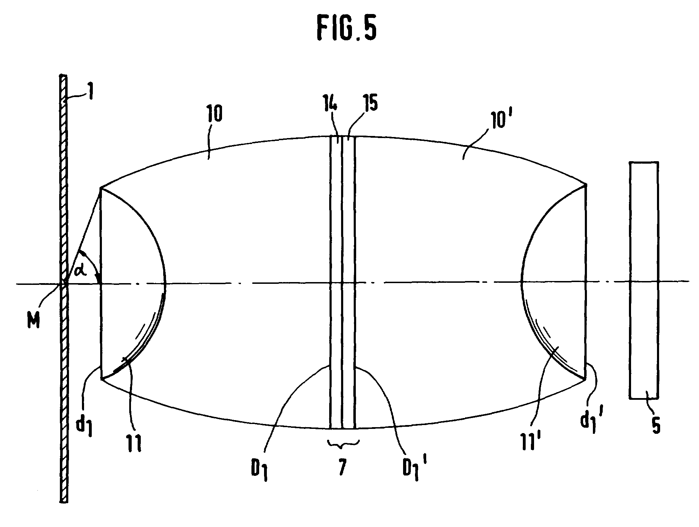

Die zuvor beschriebenen Vorteile gegenüber optischen Linsensystemen weisen die in den Fig. 4 und 5 gezeigten Ausführungsformen der Erfindung auf. In diesen Beispielen wird die Banknote 1 von zwei Lichtquellen 3 geeigneter Anregungsfrequenz beleuchtet. Die von der Banknote 1 emittierte Strahlung wird jedoch von einem anders geformten Lichtleiter aufgenommen und einer weiterverarbeitenden Einheit zugeführt.

Die in Fig. 4 gezeigte Anordnung besteht aus einem Lichtleiter 10, dessen Eintrittsfläche 11 erfindungsgemäß konkav geformt ist, während die Austrittsfläche 12 als Konvexlinse ausgeführt ist. Da alle vorn Mittelpunkt einer Kugel ausgehenden Strahlen lotrecht auf die Kugeloberfläche auftreffen, ist es zweckmäßig, die konkave Eintrittsfläche als Abschnitt einer Kugel mit Radius r auszubilden und die Banknote 1 in der Mittelpunktsebene der Kugel anzuordnen. Die vom Kugelmittelpunkt M ausgehenden Lichtstrahlen fallen senkrecht auf die Eintrittsfläche auf und gelangen daher unbeeinträchtigt, d. h. ohne Reflexionsverluste bzw. Brechung, in das Innere des Lichtleiters 10. Sie treffen auf die Seitenflächen 13 des Lichtleiters 10 und werden dort totalreflektiert. Um eine Aufweitung des Lichtleiterdurchmessers zu erreichen, weisen die Seitenflächen 13 vorzugsweise die Form von Kreisausschnitten mit dem Radius R auf.

Der Radius r kann jedoch auch wesentlich größer gewählt werden, so daß die Banknote 1 nicht länger in der Mittelpunktsebene angeordnet werden kann. In diesem Fall wirkt das optische System 10 für Strahlung, die unter einem kleinen Einfallswinkel einfällt und daher nicht auf die Seitenflächen 13 trifft, wie eine Konkav-/Konvex-Kondensorlinse. Auch gilt, daß der Austrittswinkel kleiner ist als der Einfallswinkel.

In einer weiteren Variante können die Seitenflächen 13 Ausschnitte einer Ellipse sein, deren einer Brennpunkt der Punkt M ist.

Um die Totalreflexion der einfallenden Strahlung gewährleisten zu können, darf die numerische Apertur den Grenzwinkel für die Totalreflexion nicht überschreiten. Da es bereits Materialien gibt, deren Grenzwinkel für die Totalreflexion im Bereich von 80° liegt, bedeutet auch diese Bedingung keine Einschränkung für den Einsatz des erfindungsgemäßen Meßsystems.

Die Strahlung durchquert den Lichtleiter 10 und fällt auf die als Konvexlinse ausgeführte Austrittsfläche 12. Diese sorgt für einen weitgehend parallelen Strahlengang, so daß im Anschluß an den Lichtleiter 10 ein Interferenzfilter 7 angeordnet werden kann. Bei dieser Ausführung ist also die erste Linse der in Fig. 1 gezeigten Optik 6 bereits in den Lichtleiter integriert.

Alternativ wäre es natürlich ebenso möglich, den Lichtleiter mit einer planparallelen Austrittsfläche des Durchmessers D1, wie in Fig. 4 durch die gestrichelte Linie angedeutet, zu versehen und die Konvexlinse, analog zu Fig. 1, in einem gewissen Abstand vom Lichtleiter 10 anzuordnen.

Der gezeigte Lichtleiter 10 ist rotationssymmetrisch zur optischen Achse. Bei speziellen Anwendungen ist es jedoch auch denkbar, dem Lichtleiter 10 eine beliebige andere Form zu geben. Wesentlich ist lediglich, daß sie eine große numerische Apertur aufweist, die in einen kleineren Austrittswinkel umgesetzt wird.

In einer weiteren Variante kann für die Ausbreitung des Lichts innerhalb des Systems 10 statt der Totalreflexion auch der Effekt der Spiegelung ausgenutzt werden. Hierfür erhält das optische Material anstelle eines Überzugs mit geeignetem Brechungsindex eine spiegelnde Beschichtung, die nach außen von einer im relevanten Wellenlängenbereich absorbierenden Schutzlackschicht abgedeckt wird, um Störsignale zu vermeiden. Diese Vorgehensweise empfiehlt sich insbesondere bei Anordnungen mit äußerst großer numerischer Apertur, welche den Grenzwinkel der Totalreflexion für das verwendete Material übersteigt. Die Verlustrate liegt allerdings bei dieser Variante höher als beim Einsatz von Lichtleitern.

Bei geeigneter Wahl der Parameter, wie der numerischen Apertur und der Aufweitung der Seitenflächen, lassen sich sogar Austrittswinkel erreichen, die es ermöglichen, Interferenzfilter ohne zwischengeschaltete Linsensysteme zu verwenden.

Fig. 5 zeigt eine derartige Anordnung. Hier werden die als Interferenzfilter 7 wirkenden dielektrischen Schichten 14 und 15 direkt auf die planparallele Endfläche des Lichtleiters 10 aufgedampft. Um das gefilterte Licht einem Detektor 5 zuführen zu können, wird der gleiche Aufbau nochmals vorgesehen und spiegelbildlich zum ersten Aufbau angeordnet, so daß die konkave Fläche 11' des Lichtleiters 10' auf den Detektor 5 gerichtet ist.

Die Interferenzschichten 14 und 15 müssen selbstverständlich nicht direkt aufgedampft werden, sondern können als fertiges Bauteil zwischen den optischen Systemen 10 und 10' angeordnet werden.

Ebenso ist es möglich, die optischen Systeme 10 und 10' unterschiedlich zu gestalten. Beispielsweise können die Seitenflächen 13 und 13' eine unterschiedliche Krümmung aufweisen.

Dieser symmetrische Aufbau ohne Optik ist auch beim Einsatz des in Fig. 1 gezeigten Lichtleiterstabes möglich. In diesem Fall zeigt die kleinere Querschnittsfläche d auf den Detektor 5.

## Patentansprüche

1. Vorrichtung zur optischen Prüfung von Meßobjekten, wie Sicherheitsdokumenten oder Etiketten mit einem optischen System, das die vom Meßobjekt kommende Strahlung erfaßt und einer weiterverarbeitenden Einheit zuführt, wobei das optische System aus einem Lichtleiterstab (10) besteht, der in seiner Laufrichtung eine Querschnittswandlung aufweist, wobei das schmale Querschnittsende (d, d1) auf das Meßobjekt gerichtet ist, während das aufgeweitete Querschnittsende (D, D1) der weiterverarbeitenden Einheit (6, 7) zugewendet ist, und das schmale Querschnittsende (d1) zur Erfassung der vom Meßobjekt kommenden Strahlung eine konkave Eintrittsfläche (11) aufweist.

2. Vorrichtung nach Anspruch 1, **dadurch gekennzeichnet**, daß der Lichtleiterstab eine Querschnittswandlung aufweist, so daß der Austrittswinkel kleiner ist als der Öffnungswinkel der weiterverarbeitenden Einheit (6, 7).

3. Vorrichtung nach einem der Ansprüche 1 oder 2, **dadurch gekennzeichnet**, daß der Lichtleiterstab mindestens eine Krümmung aufweist.

4. Vorrichtung nach einem der Ansprüche 1 bis 3, **dadurch gekennzeichnet**, daß die konkave Eintrittsfläche (11) die Form eines Kugelabschnitts aufweist.

5. Vorrichtung nach einem der Ansprüche 1 bis 4, **dadurch gekennzeichnet**, daß der Lichtleiterstab (10) rotationssymmetrisch zur optischen Achse ist und die Seitenflächen (13) in ihren Längsschnittebenen die Form von Kreisausschnitten aufweisen.

6. Vorrichtung nach einem der Ansprüche 1 bis 5, **dadurch gekennzeichnet**, daß der Lichtleiterstab (10) aus optischem Material besteht, das einen Überzug aus optisch dünnerem Material aufweist.

**7.** Vorrichtung nach einem der Ansprüche 1 bis 5, **dadurch gekennzeichnet**, daß der Lichtleiterstab (10) aus einem optischen Material, wie Glas oder optischem Kunststoff, besteht und daß die Seitenflächen (13) der optischen Einheit (10) spiegelnd beschichtet sind.

**8.** Vorrichtung nach Anspruch 7, **dadurch gekennzeichnet**, daß die Seitenflächen (13) zusätzlich einen schützenden, im relevanten Wellenlängenbereich absorbierenden Lacküberzug aufweisen.

**9.** Vorrichtung nach einem der Ansprüche 1 bis 8, **dadurch gekennzeichnet**, daß die Austrittsfläche des Lichtleiterstabs (10) plan ist.

**10.** Vorrichtung nach einem der Ansprüche 1 bis 8, **dadurch gekennzeichnet**, daß die weiterverarbeitende Einheit ein optisch abbildendes Linsensystem (6) ist.

**11.** Vorrichtung nach Anspruch 10, **dadurch gekennzeichnet**, daß für das Linsensystem (6) dicke Linsen mit einer im Verhältnis zu ihrer Brennweite kleinen Schnittweite verwendet werden.

**12.** Vorrichtung nach einem der Ansprüche 1 bis 9, **dadurch gekennzeichnet**, daß die weiterverarbeitende Einheit ein sich direkt an die Austrittsfläche (D, D1) anschließender Interferenzfilter (7) ist.

**13.** Vorrichtung nach Anspruch 12, **dadurch gekennzeichnet**, daß spiegelbildlich zum Interferenzfilter (7) ein weiterer Lichtleiter (10') angeordnet ist.

**14.** Vorrichtung nach einem der Ansprüche 1 bis 8, **dadurch gekennzeichnet**, daß die Austrittsfläche des Lichtleiterstabs (10) die Form einer Konvexlinse (12) aufweist.

**15.** Vorrichtung nach Anspruch 14, **dadurch gekennzeichnet**, daß die weiterverarbeitende Einheit (16) aus einem Interferenzfilter (7) und einer optisch abbildenden Linse (17) besteht.

**16.** Vorrichtung nach einem der Ansprüche 1 bis 15, **dadurch gekennzeichnet**, daß mehrere Lichtleiterstäbe (2, 10) über oder nebeneinander angeordnet werden.

**17.** Vorrichtung nach Anspruch 1, **dadurch gekennzeichnet**, daß der Lichtleiterstab konisch geformt ist.

**Claims**

**1.** An apparatus for optically testing objects such as security documents or labels with an optical system that detects the radiation from the test object and feeds it to a processing unit, the optical system comprising a light pipe (10) having a change in cross section in the longitudinal direction thereof, the narrow cross-sectional end (d, d1) being directed onto the test object while the flared cross-sectional end (D, D1) faces the processing unit (6, 7), and the narrow cross-sectional end (d1) having a concave entrance surface (11) for detecting the radiation from the test object.

**2.** An apparatus according to claim 1, characterized in that the light pipe has a change in cross section so that the angle of emergence is smaller than the aperture angle of the processing unit (6, 7).

**3.** An apparatus according to either of claims 1 and 2, characterized in that the light pipe has at least one curve.

**4.** An apparatus according to any of claims 1 to 3, characterized in that the concave entrance surface (11) has the form of a spherical segment.

**5.** An apparatus according to any of claims 1 to 4, characterized in that the light pipe (10) is rotationally symmetrical to the optical axis and the side surfaces (13) have the form of sectors of a circle in their longitudinal cutting planes.

**6.** An apparatus according to any of claims 1 to 5, characterized in that the light pipe (10) is made of optical material having a coating of optically thinner material.

**7.** An apparatus according to any of claims 1 to 5, characterized in that the light pipe (10) is made of an optical material such as glass or optical plastic, and the side surfaces (13) of the optical unit (10) bear a specular coating.

**8.** An apparatus according to claim 7, characterized in that the side surfaces (13) additionally bear a protective lacquer coat absorbent in the relevant wave range.

**9.** An apparatus according to any of claims 1 to 8, characterized in that the exit surface of the light pipe (10) is planar.

**10.** An apparatus according to any of claims 1 to 8, characterized in that the processing unit is an optically imaging lens system (6).

**11.** An apparatus according to claim 10, characterized in that thick lenses with a small focal intercept relative to their focal length are used for the lens system (6).

**12.** An apparatus according to any of claims 1 to 9, characterized in that the processing unit is an interference filter (7) directly following the exit surface (D, D1).

**13.** An apparatus according to claim 12, characterized in that a further light guide (10') is disposed mirror-inverted to the interference filter (7).

**14.** An apparatus according to any of claims 1 to 8, characterized in that the exit surface of the light pipe (10) has the form of a convex lens (12).

**15.** An apparatus according to claim 14, characterized in that the processing unit (16) comprises an interference filter (7) and an optically imaging lens (17).

**16.** An apparatus according to any of claims 1 to 15, characterized in that a plurality of light pipes (2, 10) are disposed one above or beside the other.

**17.** An apparatus according to claim 1, characterized in that the light pipe is conic in shape.

**Revendications**

**1.** Dispositif pour la vérification optique d'objets de mesure tels que des documents de sécurité ou des étiquettes au moyen d'un système optique qui capte le rayonnement originaire de l'objet de mesure pour l'amener à une unité de traitement, dans lequel le système optique est composé d'une tige de guidage optique (10) qui présente, dans sa direction d'avancement, une transformation de sa section transversale, l'extrémité à faible section transversale (d, d1) étant dirigée vers l'objet de mesure tandis que l'extrémité à section transversale élargie (D, D1) est dirigée vers l'unité de traitement (6, 7) et l'extrémité de faible section transversale (d1) présente, pour la réception du rayonnement originaire de l'objet de mesure, une surface concave d'entrée (11).

**2.** Dispositif selon la revendication 1, caractérisé en ce que la tige de guidage optique présente une transformation de sa section transversale de sorte que l'angle de sortie soit inférieur à l'angle d'ouverture de l'unité de traitement (6, 7).

**3.** Dispositif selon l'une des revendications 1 ou 2, caractérisé en ce que la tige de guidage optique présente au moins une courbure.

**4.** Dispositif selon l'une des revendications 1 à 3, caractérisé en ce que la surface concave d'entrée (11) présente la forme d'un segment spérique.

**5.** Dispositif selon l'une des revendications 1 à 4, caractérisé en ce que la tige de guidage optique (10) est symétrique en rotation par rapport à son axe optique et les surfaces latérales (13) présentent, dans leurs plans de section longitudinale, la forme de secteurs d'un cercle.

**6.** Dispositif selon l'une des revendications 1 à 5, caractérisé en ce que la tige de guidage optique (10) est composée d'un matériau optique présentant un revêtement en un matériau optique plus mince.

**7.** Dispositif selon l'une des revendications 1 à 5, caractérisé en ce que la tige de guidage optique (10) est composée d'un matériau optique tel que du verre ou de la matière synthétique optique et en ce que les surfaces latérales (13) de l'unité optique (10) sont revêtues de façon réfléchissante.

**8.** Dispositif selon la revendication 7, caractérisé en ce que les surfaces latérales (13) présentent de plus un revêtement protecteur dans une laque qui est absorbante dans la plage de longueur d'onde concernée.

**9.** Dispositif selon l'une des revendications 1 à 8, caractérisé en ce que la surface de sortie de la tige de guidage optique (10) est plane.

**10.** Dispositif selon l'une des revendications 1 à 8, caractérisé en ce que l'unité de traitement est un système de lentilles (6) optique pour la formation d'image (6).

**11.** Dispositif selon la revendication 10, caractérisé en ce qu'on utilise pour le système de lentilles (6) des lentilles épaisses présentant une distance focale frontale faible par rapport à leur distance focale.

**12.** Dispositif selon l'une des revendications 1 à 9, caractérisé en ce que l'unité de traitement est un filtre à interférence (7) qui suit directement la surface de sortie (D, D1).

**13.** Dispositif selon la revendication 12, caractérisé en ce qu'un autre guide optique (10') est disposé symétriquement de la façon d'un miroir par rapport au filtre à interférence (7).

**14.** Dispositif selon l'une des revendications 1 à 8, caractérisé en ce que la surface de sortie de la tige de guidage optique (10) présente la forme d'une lentille convexe (12).

**15.** Dispositif selon la revendication 14, caractérisé en ce que l'unité de traitement (16) est composée d'un filtre à interférence (7) et d'une lentille optique de formation d'image (17).

**16.** Dispositif selon l'une des revendications 1 à 15, caractérisé en ce que plusieurs tiges de guidage optique (2, 10) sont disposées l'une à côté ou au-dessus de l'autre.

**17.** Dispositif selon la revendication 1, caractérisé en ce que la tige de guidage optique présente une forme conique.

# FIG. 1

## FIG.2

## FIG.3

FIG.4

EP 0 540 715 B1

FIG.5